# EUROPÄISCHE PATENTANMELDUNG

(11) **EP 3 407 181 A1**
(43) Veröffentlichungstag der Anmeldung: **28.11.2018**
(21) Anmeldenummer: 17172518.7
(22) Anmeldetag: 23.05.2017
(51) Int. Cl.: G06F 7/58, H04L 9/32

(54) **VERFAHREN UND VORRICHTUNG ZUM RECHNERGESTÜTZTEN VERARBEITEN EINES ZUFÄLLIGEN BITMUSTERS**

(71) Anmelder: Siemens Aktiengesellschaft, 80333 München (DE)
(72) Erfinder: Aschauer, Hans, 81829 München (DE); Fries, Steffen, 85598 Baldham (DE)

(57) **Zusammenfassung**

Die Erfindung betrifft ein Verfahren zum rechnergestützten Verarbeiten eines zufälligen Bitmusters, wobei das zufällige Bitmuster nachvollziehbar und sicher bereitgestellt wird und dabei eine hohe Flexibilität des zufälligen Bitmusters gewährleistet wird. Die Erfindung ist gegenüber konventionellen Verfahren vorteilhaft, da sie insbesondere zu einem ersten Zeitpunkt sämtliche Freiheitsgrade oder Parameter (z. B. welche Datenquelle soll genutzt werden, kryptographische Verfahren für die erste kryptographische Prüfsumme, Anzahl der Messwerte, Datenformat der Messwerte, eine Länge des zufälligen Bitmusters, ein Datenformat des zufälligen Bitmusters (32-Bit Zahlen, 64 Bit-Zahlen)) für das zufällige Bitmuster in dem ersten Verfahrensdatensatz und/oder Formatdatensatz festlegt. Insbesondere besteht zum zweiten Zeitpunkt keine Wahlfreiheit mehr bezüglich der Parameter.

## Beschreibung

Die Erfindung bezieht sich auf ein Verfahren und eine Vorrichtung zum rechnergestützten Verarbeiten eines zufälligen Bitmusters.

In der Definition von kryptographischen Verfahren, z. B. in der Standardisierung von einem kryptographischen Verfahren, werden häufig pseudozufällige Bitmuster (die auch als Bitstrings bezeichnet werden können) z. B. für folgende Zwecke benötigt:
- zur Definition von S-Boxen in Blockchiffren oder Hash-Verfahren
- zur Definition von Primzahlen, die algebraische Gruppen definieren, insbesondere in asymmetrischen kryptographischen Verfahren
- zur Definition von elliptischen Kurven.

Diese Bitstrings sollen dabei Teil einer veröffentlichten Festlegung oder Definition sein.

Dabei ist es wünschenswert oder gefordert, dass diese Bitstrings auf eine Weise gewonnen werden, die für einen Dritten nachvollziehbar ist.

Das soll verhindern, dass durch eine spezielle und nur scheinbar zufällige Wahl des Bitstrings eine Schwäche in das kryptographische Verfahren als Backdoor eingeführt wird.

Eine Aufgabe der vorliegenden Erfindung ist es, ein Verfahren und eine Vorrichtung zum rechnergestützten Bereitstellen von zufälligen Bitmustern bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Bereitstellen eines zufälligen Bitmusters mit den Verfahrensschritten:
- Bereitstellen eines ersten Verfahrensdatensatzes und eines Formatdatensatzes zu einem ersten Zeitpunkt;
- Erfassen von Messwerten zu einem zweiten Zeitpunkt, wobei
   - der zweite Zeitpunkt nach dem ersten Zeitpunkt liegt,
   - die Messwerte ein Format erfüllen, das durch den Formatdatensatz festgelegt wird;
- Berechnen des zufälligen Bitmusters anhand der Messwerte mittels einer kryptographischen Funktion zu einem dritten Zeitpunkt, wobei
   - der dritte Zeitpunkt der zweite Zeitpunkt ist oder nach dem zweiten Zeitpunkt liegt;
   - die kryptographische Funktion durch den ersten Verfahrensdatensatz festgelegt wird,
   - zum dritten Zeitpunkt ein zweiter Verfahrensdatensatz erzeugt wird,
   - in einem zweiten Verfahrensdatensatz der erste Verfahrensdatensatz und das zufällige Bitmuster zugeordnet gespeichert wird;
- Bereitstellen und Senden des zweiten Verfahrensdatensatzes zu einem vierten Zeitpunkt.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem "Prozessor" kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder einem "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter "Messwerte" kann im Zusammenhang mit der Erfindung beispielsweise eine messbare, bestimmbare oder abrufbare Größe verstanden werden. Dabei kann es sich beispielsweise um Werte handeln, die insbesondere von einem Homepage oder einer anderen Datenquelle (z. B. Web-Service, Internetadresse, Zeitschrift) bereitgestellt und/oder übermittelt werden. Messwerte können somit insbesondere abrufbare Größen oder Werte oder physikalische Größen sein.

Unter "Blockkette" (engl. Blockchain) kann im Zusammenhang mit der Erfindung beispielsweise eine Implementierung einer Blockkette auf Basis von Bitcoin oder Ethereum verstanden werden. Insbesondere wird zu Implementierungsdetails hinsichtlich Bitcoin auf [1] verwiesen, die der Fachmann ggf. heranzieht, um beispielsweise im Kontext dieser Erfindung eine spezifische Realisierung umzusetzen.

Unter einem "Modul", "Komponente" und dergleichen kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein öffentliches Bereitstellen (also für beliebige Personen zugängliches Bereitstellen) der entsprechenden Datensätze verstanden werden. Dies kann beispielsweise mittels einer Blockkette (z. B. Bitcoin oder Ethereum) erfolgen, bei der die entsprechenden Datensätze beispielsweise in einer Transaktion oder mehreren Transkationen in einem oder mehreren Blöcken der Blockkette gespeichert sind. Hierbei können beispielsweise die Blöcke an einen oder mehrere Knoten der Blockkette übermittelt/gesendet werden. Alternativ oder zusätzlich können die entsprechenden Datensätze beispielsweise durch einen Zeitstempeldienst bereitgestellt werden (z. B. indem die entsprechenden Datensätze an den Zeitstempeldienst oder Blockkette gesendet werden und insbesondere der Zeitstempeldienst oder die Blockkette diese Datensätze wieder bereitstellt oder an anderen Empfänger/Knoten sendet). Alternativ oder zusätzlich können die entsprechenden Datensätze beispielsweise durch einen Publikationsdienst in digitaler Form (z. B. als digitales Dokument) oder in analoger Form (z. B. als Papierzeitschrift) bereitgestellt werden. Alternativ umfassen die Datensätze jeweils eine Prüfsumme über die Daten, die bereitgestellt werden sollen. Optional umfassen die Datensätze beispielsweise einen Verweis auf einen Speicherort oder eine Datenquelle (z. B. Internetadresse), an dem die entsprechenden Daten gespeichert sind. Wird das Bereitstellen beispielsweise mittels einer Blockkette realisiert, in dem insbesondere die Datensätze in den Transaktionen eines Blockes/Gliedes gespeichert werden, werden durch das Bereitstellen insbesondere die entsprechenden Datensätze an die Knoten der Blockkette verteilt/übermittelt, da es sich bei der Blockkette insbesondere um eine verteilte Datenbank handelt, die vorzugsweise mittels einer Peer-to-Peer Netzwerkarchitektur realisiert wird/ist.

Unter "Senden" kann im Zusammenhang mit der Erfindung beispielsweise ein Senden eines Datensatzes an einen öffentlich zugänglichen Empfänger (also für beliebige Personen zugängliches Bereitstellen) mit den entsprechenden Datensätzen verstanden werden. Dies kann beispielsweise unter Verwendung einer Blockkette (z. B. Bitcoin, Ethereum oder eine andere öffentliche Blockkette) erfolgen, bei der die entsprechenden Datensätze beispielsweise in einer Transaktion oder mehreren Transkationen in einem oder mehreren Blöcken der Blockkette gespeichert sind und an einen Empfänger/Knoten übermittelt/gesendet werden. Alternativ oder zusätzlich können die entsprechenden Datensätze beispielsweise durch einen Zeitstempeldienst bereitgestellt werden.

Unter einer "Prüfsumme", beispielsweise die erste kryptographische Prüfsumme oder die zweite kryptographische Prüfsumme, kann im Zusammenhang mit der Erfindung beispielsweise eine kryptographische Prüfsumme oder ein kryptographischer Hash bzw. Hashwert verstanden werden, die insbesondere mittels einer kryptographischen Hashfunktion über einen Datensatz gebildet oder berechnet werden. Weiterhin kann darunter insbesondere auch eine digitale Signatur oder ein kryptographischer Nachrichtenauthentisierungscode verstanden werden.

Unter "Transaktion" bzw. "Transaktionen" können im Zusammenhang mit der Erfindung beispielsweise ein Smart-Contract, eine Datenstruktur oder eine Transaktion verstanden werden, die insbesondere die genannten Datensätze speichern. Unter "Transaktion" bzw. "Transaktionen" können im Zusammenhang mit der Erfindung beispielsweise auch die Daten einer Transaktion eines Gliedes einer Bockkette (engl. Blockchain) verstanden werden. Ein Transaktionsdatensatz bzw. eine Transkation kann einen Programmcode umfassen oder ein Programmcode sein, der insbesondere einen Smart Contract realisiert. Mittels des Smart-Contracts bzw. des entsprechenden Programmcodes kann auch das/die erfindungsgemäße/n Verfahren realisiert werden, wobei eine solche Realisierung/Implementierung insbesondere plattformunabhängig ist. Dabei können insbesondere auch nur ein einzelner oder mehrere Verfahrensschritte durch einen Smart-Contract realisiert sein (z. B. das Ermitteln der Messwerte). In einer solchen Realisierung können beispielsweise rechenintensive Verfahrensschritte außerhalb der Blockkette berechnet werden (also nicht unter Verwendung der virtuellen Maschine) und/oder weniger rechenintensive Verfahrensschritte werden innerhalb der Blockkette (also mittels eines Smart-Contracts der durch die virtuelle Maschine ausgeführt wird) ausgeführt. So kann beispielsweise das Erfassen der Messwerte und/oder das Bereitstellen der Datensätze (z. B. erster Verfahrensdatensatz und/oder zweiter Verfahrensdatensatz und/oder Formatdatensatzmittels) mittels eines Smart-Contracts realisiert werden. Beispielsweise kann das Berechnen des zufälligen Bitmusters dann außerhalb der Blockkette erfolgen. Hierzu kann beispielsweise ein entsprechender Smart-Contract einen Webservice oder ähnliches nutzen, um die Berechnung durchzuführen (z. B. in dem ein Webservice genutzt wird, der eine kryptographische Funktion für Daten (z. B. Messwerte) anbietet.

Unter einem "Transaktionsdatensatz" kann im Zusammenhang mit der Erfindung beispielsweise auch eine Transkation eines Gliedes/Blockes einer Blockkette verstanden werden.

Unter einem "Programmcode" kann im Zusammenhang mit der Erfindung beispielsweise Steuerungsbefehle, Programmbefehle, oder Steuerungsanweisungen verstanden werden, die insbesondere in einer Transaktion gespeichert sind.

Unter einem "Smart Contract" kann im Zusammenhang mit der Erfindung beispielsweise ein ausführbarer Programmcode verstanden werden. Der Programmcode ist insbesondere auf einer virtuellen Maschine ausführbar, wobei die virtuelle Maschine vorzugsweise turingvollständig (engl. Turing completeness) ist. Die virtuelle Maschine kann beispielsweise durch die Blockkette selbst realisiert/implementiert werden (z. B. Ethereum) und/oder die Blöcke mit den Transaktionen/Smart-Contracts (also der Programmcode) einer Blockkette sind insbesondere auf mehreren Knoten der Blockkette verteilt.

Unter "Glied" kann im Zusammenhang mit der Erfindung beispielsweise ein Block einer Blockkette verstanden werden, der insbesondere als Datenstruktur realisiert ist und vorzugsweise jeweils eine der Transaktionen oder mehrere der Transaktionen umfasst. Ein Glied kann beispielsweise Angaben zur Größe (Datengröße in Byte) des Gliedes, einen Glied-Header (engl. Blockheader), einen Transaktionszähler und eine oder mehrere Transaktionen umfassen [1]. Der Glied-Header kann beispielsweise eine Version, eine Verkettungsprüfsumme, eine Transkations-Prüfsumme, einen Zeitstempel, einen Proof-of-Work Nachweis und eine Nonce (Einmalwert, Zufallswert oder Zähler, der für den Proof-of-Work Nachweis verwendet wird) umfassen [1].

Ein zufälliges Bitmuster wird im Zusammenhang mit der Erfindung insbesondere analog zu einer Prüfsumme berechnet, beispielsweise mittels einer kryptographischen Funktion, die einen kryptographischen Hash für die Messwerte berechnet.

Das Verfahren ist dahingehend vorteilhaft, um beispielsweise das zufällige Bitmuster nachvollziehbar und sicher bereitzustellen und dabei eine hohe Flexibilität des zufälligen Bitmusters zu gewährleisten. Die Erfindung ist gegenüber konventionellen Verfahren vorteilhaft, da sie insbesondere zum ersten Zeitpunkt sämtliche Freiheitsgrade oder Parameter (z. B. welche Datenquelle soll genutzt werden, kryptographische Verfahren für die erste kryptographische Prüfsumme, Anzahl der Messwerte, Datenformat der Messwerte, eine Länge des zufälligen Bitmusters, ein Datenformat des zufälligen Bitmusters (32-Bit Zahlen, 64 Bit-Zahlen)) für das zufällige Bitmuster und/oder ein kryptographisches Verfahren (das insbesondere das zufällige Bitmuster nutzt) in dem ersten Verfahrensdatensatz und/oder Formatdatensatz festlegt. Insbesondere besteht zum zweiten Zeitpunkt keine Wahlfreiheit mehr bezüglich der Parameter. Insbesondere bleiben nur die Messwerte der gewählten Parameter bis zu diesem Zeitpunkt offen, jedoch hat auf diese die definierende Partei keinen Einfluss (also die Partei, die den ersten Verfahrensdatensatz und/oder Formatdatensatz bereitstellt).

Das Verfahren ist insbesondere dahingehend vorteilhaft, da eine zeitliche Komponente in das Verfahren eingebracht wird, die retrospektiv die Verifizierbarkeit des zufälligen Bitmusters erlaubt, ohne insbesondere der definierenden Partei irgendeine ausnutzbare Wahlfreiheit zu lassen, die beispielsweise zu einer Backdoor führen könnte. Beispielsweise können mit der Erfindung kryptographische Verfahren und/oder kryptographische Parameter realisiert werden, die nicht im Verdacht stehen, eine Backdoor zu besitzen, wie es insbesondere bei konventionellen Verfahren möglich ist, bei denen durch geeignete Wahl des zufälligen Bitmusters eine Schwachstelle in ein kryptographisches Verfahren eingeführt wird.

Dadurch ist das Verfahren auch dahingehend vorteilhaft, um insbesondere eine direkte Veröffentlichbarkeit des Verfahrens und/oder der Datenquelle für die Wahl eines bestimmten Parameters eines Verfahrens zu realisieren.

Dadurch ist das Verfahren auch dahingehend vorteilhaft, um beispielsweise mittels des zufälligen Bitmusters Parameter für ein kryptographisches Verfahren (z. B. zur Berechnung von elliptischen Kurven) festzulegen bzw. zu definieren.

Insbesondere bedeutet hinsichtlich der Erfindung "zufällig" im Zusammenhang mit dem "Bitmuster", dass durch das Verfahren das Bitmuster selbst nicht vorgegeben wird. Insbesondere werden jedoch alle nötigen Parameter durch den Verfahrensdatensatz und den Formatdatensatz vorgegeben (zum ersten Zeitpunkt), um anhand der zu einem späteren Zeitpunkt (zweiter Zeitpunkt) verfügbaren Messwerte das zufälliges Bitmuster reproduzierbar zu berechnen. Somit ist insbesondere das zufällige Bitmuster vor dem zweiten Zeitpunkt nicht bekannt oder berechenbar, jedoch ist das zufällige Bitmuster insbesondere ab dem zweiten Zeitpunkt reproduzierbar berechenbar (also kann insbesondere anhand der Messwerte reproduziert werden).

Bei einer ersten Ausführungsform des Verfahrens wird im ersten Verfahrensdatensatz der Formatdatensatz gespeichert oder der erste Verfahrensdatensatz umfasst den Formatdatensatz.

Bei einer weiteren Ausführungsform wird durch den ersten Verfahrensdatensatz ein erster zeitlicher Mindestabstand zwischen dem ersten Zeitpunkt und/oder dem zweiten Zeitpunkt vorgegeben, und/oder
durch den ersten Verfahrensdatensatz wird ein zweiter zeitlicher Mindestabstand zwischen dem zweiten Zeitpunkt und/oder dem dritten Zeitpunkt vorgegeben, und/oder
durch den ersten Verfahrensdatensatz wird ein dritter zeitlicher Mindestabstand zwischen dem dritten Zeitpunkt und/oder dem vierten Zeitpunkt vorgegeben.

Das Verfahren ist dahingehend vorteilhaft, um insbesondere die Zeitpunkte zu bestimmen, damit beispielsweise nicht unmittelbar nach dem ersten Zeitpunkt eine Datenquelle abgerufen wird, obwohl dies für das Verfahren noch gar nicht notwendig ist. Hierdurch kann insbesondere eine unnötige Bandbreitenausnutzung einer Internetverbindung vermieden werden.

Bei einer weiteren Ausführungsform des Verfahrens wird eine erste Datenquelle für die Messwerte durch den ersten Verfahrensdatensatz festgelegt.

Das Verfahren ist dahingehend vorteilhaft, um insbesondere eine Datenquelle vorzugeben, die Messwerte mit einer bestimmten Zufallsverteilung/Zufälligkeit bereitstellt. Bei der Datenquelle kann es sich beispielsweise um eine Internetadresse, eine Angabe für eine Zeitung (z. B. mit Angabe der Ausgabe, Seiten- und Zeilenangaben), ein Geburtenregister mit einer Anzahl der Geburten in einer bestimmten Stadt an einem oder mehreren Tagen, einen Friedhofsplan mit einer Anzahl der Grabsteine in einer Grabsteinreihe auf einem Friedhof handeln. Die Messwerte können dann beispielsweise direkt über die Datenquelle bezogen werden oder sind über einen separaten Sensor/Datenquelle (eine Datenquelle kann insbesondere auch ein Sensor sein) erfassbar z. B. bei der Anzahl der Grabsteine, könnte eine Luftaufnahme verwendet werden. Auch können beispielsweise im ersten Verfahrensdatensatz die Art Messwerte oder der Messung der Messwerte vorgegeben werden. Beispielsweise werden nur helle Grabsteine und deren Abmessung und der genannte Todestag(e) verwendet oder aus dem Geburtenregister werden nur die Anzahl der Geburten von Mädchen berücksichtigt.

Bei einer weiteren Ausführungsform des Verfahrens wird eine zeitliche Mindestdauer einer Verfügbarkeit der Messwerte durch den ersten Verfahrensdatensatz festgelegt und/oder eine zeitliche Maximaldauer einer Verfügbarkeit der Messwerte wird durch den ersten Verfahrensdatensatz festgelegt.

Das Verfahren ist dahingehend vorteilhaft, um insbesondere sicher zu stellen, dass die Messwerte lange genug verfügbar sind oder um insbesondere sicher zu stellen, dass Messwerte nur so lange verwendet werden sollen, solange man sicher sein kann, dass sich diese nicht verändern.

Bei einer weiteren Ausführungsform des Verfahrens erfolgt das Bereitstellen des ersten Verfahrensdatensatzes und/oder des Formatdatensatzes und/oder des zweiten Verfahrensdatensatzes mittels einer Blockkette und/oder einem Zeitstempeldienst und/oder einer Publikation.

Das Verfahren ist dahingehend vorteilhaft, um insbesondere sicher zu stellen, dass die bereitgestellten Datensätze unveränderlich sind und/oder, dass insbesondere in Zeitpunkt des Bereitstellens nachvollziehbar ist.

Bei einer weiteren Ausführungsform des Verfahrens werden der erste Verfahrensdatensatz und/oder der Formatdatensatz und/oder der zweite Verfahrensdatensatz derart bereitgestellt, dass diese unveränderlich sind.

Das Verfahren ist dahingehend vorteilhaft, um insbesondere keine Manipulation/Veränderung der Datensätze zu ermöglichen.

Bei einer weiteren Ausführungsform des Verfahrens können die Messwerte reproduzierbar erfasst werden (und die Messwerte sind insbesondere nicht veränderlich).

Das Verfahren ist dahingehend vorteilhaft, um insbesondere die Messwerte der Öffentlichkeit und somit allen potentiellen Nutzern bereitzustellen.

Bei einer weiteren Ausführungsform des Verfahrens werden eine zweite Datenquelle oder weitere Datenquellen durch den ersten Verfahrensdatensatz festgelegt, und die zweite Datenquelle oder die weiteren Datenquellen stellen die kryptographische Funktion und/oder die Konvertierungsfunktion bereit.

Das Verfahren ist dahingehend vorteilhaft, um insbesondere die Funktionen von vertrauenswürdigen Datenquellen (beispielsweise ein vertrauenswürdiger Dienst wie z. B. ein Zeitstempeldienst oder ein Blockkettendienst) bereitzustellen.

Gemäß einem weiteren Aspekt betrifft die Erfindung ein Verfahren zum rechnergestützten Verifizieren eines zufälligen Bitmusters mit den Verfahrensschritten:
- Empfangen eines zweiten Verfahrensdatensatzes, wobei der zweite Verfahrensdatensatzes mittels des Verfahrens nach einem der Ansprüche 1 - 10 ermittelt wurde,
- Erfassen der Messwerte;
- Berechnen einer zweiten kryptographischen Prüfsumme für die Messwerte mittels der kryptographischen Funktion die durch den ersten Verfahrensdatensatz festgelegt wird;
- Vergleichen der zweiten kryptographischen Prüfsumme mit dem zufälligen Bitmuster, wobei abhängig vom Prüfergebnis ein Steuersignal bereitgestellt wird.

Gemäß einem weiteren Aspekt betrifft die Erfindung eine erste Vorrichtung zum rechnergestützten Bereitstellen eines zufälligen Bitmusters aufweisend:
- ein erstes Bereitstellungsmodul (310) zum Bereitstellen eines ersten Verfahrensdatensatzes und eines Formatdatensatzes zu einem ersten Zeitpunkt;
- ein erstes Erfassungsmodul (320) zum Erfassen von Messwerten zu einem zweiten Zeitpunkt, wobei
   - der zweite Zeitpunkt nach dem ersten Zeitpunkt liegt,
   - die Messwerte ein Format erfüllen, das durch den Formatdatensatz definiert ist;
- ein erstes Berechnungsmodul (330) zum Berechnen des zufälligen Bitmusters anhand der Messwerte mittels einer kryptographischen Funktion zu einem dritten Zeitpunkt, wobei
   - der dritte Zeitpunkt der zweite Zeitpunkt ist oder nach dem zweiten Zeitpunkt liegt;
   - die kryptographische Funktion durch den ersten Verfahrensdatensatz festgelegt wird,
   - zum dritten Zeitpunkt ein zweiter Verfahrensdatensatz erzeugt wird,
   - in einem zweiten Verfahrensdatensatz der erste Verfahrensdatensatz und das zufällige Bitmuster zugeordnet gespeichert wird;
- ein erstes Kommunikationsmodul (340) zum Bereitstellen und Senden des zweiten Verfahrensdatensatzes zu einem vierten Zeitpunkt.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen) zum rechnergestützten Bereitstellen eines zufälligen Bitmusters.

Gemäß einem weiteren Aspekt betrifft die Erfindung eine zweite Vorrichtung zum rechnergestützten Verifizieren eines zufälligen Bitmusters aufweisend:
- ein zweites Kommunikationsmodul (410) zum Empfangen eines zweiten Verfahrensdatensatzes, wobei der zweite Verfahrensdatensatzes mittels des Verfahrens nach einem der Ansprüche 1 - 10 ermittelt wurde,
- ein zweites Erfassungsmodul (420) zum Erfassen der Messwerte;
- ein zweites Berechnungsmodul (430) zum Berechnen einer zweiten kryptographischen Prüfsumme für die Messwerte mittels der kryptographischen Funktion die durch den ersten Verfahrensdatensatz festgelegt wird;
- ein zweites Vergleichsmodul (440) zum Vergleichen der zweiten kryptographischen Prüfsumme mit dem zufälligen Bitmuster, wobei abhängig vom Prüfergebnis ein Steuersignal bereitgestellt wird.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen) zum rechnergestützten Verifizieren eines zufälligen Bitmusters.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannten erfindungsgemäßen Vorrichtungen erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass die erfindungsgemäßen Vorrichtungen erstellt werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung als ein Ablaufdiagramm;
- Fig. 3: ein drittes Ausführungsbeispiel der Erfindung;
- Fig. 4: ein viertes Ausführungsbeispiel der Erfindung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies explizit in dem jeweiligen Ausführungsbeispiel genannt sein muss.

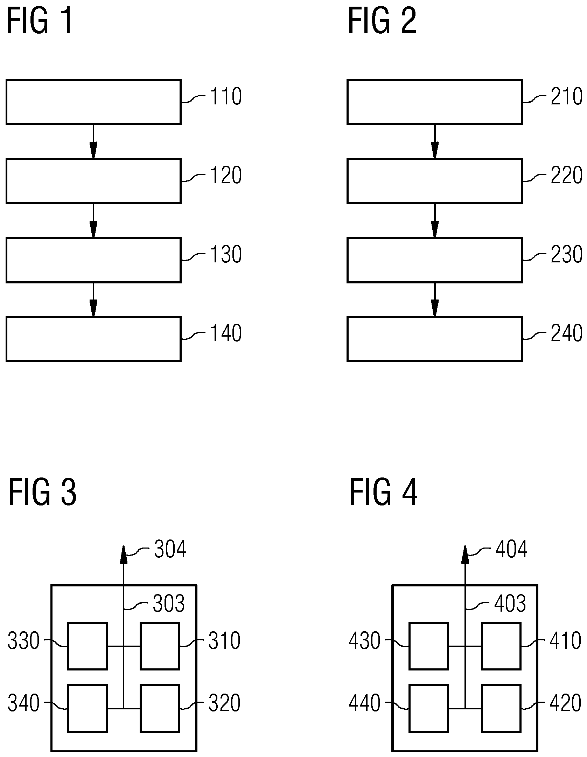

Die Fig. 1 zeigt ein erstes Ausführungsbeispiel der Erfindung als ein Ablaufdiagramm des erfindungsgemäßen Verfahrens zum rechnergestützten Bereitstellen eines zufälligen Bitmusters. Das Verfahren wird vorzugsweise von einem Sendeknoten, insbesondere einem Blockkettenknoten, realisiert.

Das Verfahren umfasst einen ersten Verfahrensschritt 110 zum Bereitstellen eines ersten Verfahrensdatensatzes und eines Formatdatensatzes zu einem ersten Zeitpunkt. Auf diese Weise werden die Datensätze veröffentlicht und sind vorzugsweise sicher hinterlegt (z. B. öffentlich zugänglich und mittels einer Prüfsumme abgesichert). Dabei wird insbesondere sichergestellt, dass nachvollziehbar ist, dass zum ersten Zeitpunkt die Datensätze bereitgestellt wurden. Dies kann beispielsweise mittels einer Blockkette, wie z. B. Bitcoin oder Ethereum, erfolgen. Die Datensätze sind hierbei in der/(den) Transaktion(en) eines Blocks der Blockkette gespeichert. Hierzu können beispielsweise die entsprechenden Transaktionen einen Zeitstempel umfassen, der den ersten Zeitpunkt angibt. Da der Inhalt der Transkationen von Blöcken einer Blockkette unveränderlich ist, können insbesondere auf diese Weise die Datensätze einfach bereitgestellt werden. Mit anderen Worten, ist es bevorzugt, dass die Datensätze integritätsgeschützt (z. B. mittels Prüfsummen) bereitgestellt werden, wobei der erste Zeitpunkt (also der Zeitpunkt des Bereitstellens) ebenfalls zusammen mit den Datensätzen integritätsgeschützt bereitgestellt wird (z. B. als weitere Transkation oder in der/den Transaktion/en gespeichert ist).

Der Verfahrensdatensatz beschreibt beispielsweise, wie ein zufälliger Bitstring/Bitmuster generiert werden soll, z. B. welche Datenquellen verwendet werden, welche kryptographischen Verfahren für die Berechnung der kryptographischen Prüfsummen (z. B. erste/zweite kryptographische Prüfsumme) verwendet werden, wann und wie lange die Datenquellen zum Erfassen/Abrufen der Messwerte zur Verfügung stehen. Der Verfahrensdatensatz gibt beispielsweise auch an, wie das zufällige Bitmuster für Parameter eines kryptographischen Verfahrens verwendet werden soll (z. B. als Seed für einen Zufallszahlengenerator, als S-Box für ein kryptographisches Verfahren). Beispielsweise kann der Verfahrensdatensatz angeben, dass das zufällige Bitmuster eine Länge von 512 Bit hat. Dabei können beispielsweise die ersten 256 Bit als privater Schlüssel für ein asymmetrisches kryptographisches Verfahren dienen. Die Bits 257 - 350 können beispielsweise als Seed für einen Zufallszahlengenerator dienen und die Bits 351 - 512 können im Rahmen eines Challenge-Response-Verfahrens als Startwert eingesetzt werden. Alternativ kann der Verfahrensdatensatz angeben, dass mittels des zufälligen Bitmusters auf analoge Weise Parameter für elliptische Kurven bereitgestellt werden.

Der Formatdatensatz beschreibt beispielsweise wie viele Messwerte erfasst werden sollen, welche numerische Darstellung (z. B. int, char, floating point) für das zufällige Bitmuster gefordert ist, wie die einzelnen Messwerte aufbereitet werden sollen (Datenformat, Datenstruktur). Beispielsweise kann der Formatdatensatz auch eine Formatierungs- oder Konvertierungsfunktion angeben, um die Messwerte aufzubereiten, damit diese den Anforderungen, die durch den Formatdatensatz und/oder Verfahrensdatensatz festgelegt werden, genügen oder erfüllen.

Der Formatdatensatz kann beispielsweise ein (integraler) Teil des ersten Verfahrensdatensatzes sein (z. B. in diesem gespeichert sein oder der erste Verfahrensdatensatz umfasst eine Referenz auf den Formatdatensatz) oder als ein separater Datensatz realisiert sein.

Das Verfahren umfasst einen zweiten Verfahrensschritt 120 zum Erfassen von Messwerten zu einem zweiten Zeitpunkt, wobei der zweite Zeitpunkt nach dem ersten Zeitpunkt liegt und die Messwerte ein Format (z. B. die beim Formatdatensatz genannten Beispiele) erfüllen, das durch den Formatdatensatz festgelegt wird. Die Messwerte sind dabei vorzugsweise öffentlich zugänglich und sind insbesondere erst nach dem ersten Zeitpunkt und spätestens zum zweiten Zeitpunkt messbar oder verfügbar. Die Messwerte sind insbesondere zum ersten Zeitpunkt nicht vorhersehbar.

Die Messwerte sind insbesondere öffentlich für einen vorgegebenen Zeitraum oder ab einem bestimmten Zeitpunkt (z. B. zweiter Zeitpunkt) von einer ersten Datenquelle messbar oder verfügbar. Insbesondere sind diese Messwerte unveränderlich oder die entsprechenden Messwerte können reproduzierbar gemessen/erzeugt/abgerufen werden. Also bei mehrmaligem Erfassen der Messwerte werden reproduzierbar die gleichen Messwerte gemessen.

Anhand dieser Messwerte kann das zufällige Bitmuster ab dem zweiten Zeitpunkt reproduzierbar berechnet werden, indem die Messwerte direkt verwendet werden, die Messwerte in ein gefordertes Datenformat konvertiert werden und/oder die Messwerte als Eingabedaten für eine kryptographische/mathematische Funktion verwendet werden.

Das Verfahren umfasst hierzu einen dritten Verfahrensschritt 130 zum Berechnen des zufälligen Bitmusters anhand der Messwerte mittels einer kryptographischen Funktion zu einem dritten Zeitpunkt, wobei der dritte Zeitpunkt der zweite Zeitpunkt ist oder nach dem zweiten Zeitpunkt liegt (also frühestens der Verfahrensschritt zum zweiten Zeitpunkt ausgeführt werden kann). Zudem wird die kryptographische Funktion durch den ersten Verfahrensdatensatz festgelegt. Zudem wird zum dritten Zeitpunkt ein zweiter Verfahrensdatensatz erzeugt und in dem zweiten Verfahrensdatensatz ist der erste Verfahrensdatensatz und das zufällige Bitmuster zugeordnet gespeichert. Zugeordnet gespeichert bedeutet insbesondere, dass die entsprechenden Daten dem zweiten Verfahrensdatensatz zugeordnet sind. Dies kann beispielsweise dadurch realisiert werden, indem diese Daten im zweiten Verfahrensdatensatz gespeichert sind oder der zweite Verfahrensdatensatz Prüfsummen über die entsprechenden Daten umfasst und zusätzlich eine Datenquelle (z. B. ein Server oder eine Internetadresse) angegeben ist, wo diese Daten bereitgestellt werden.

Mit anderen Worten handelt es sich bei dem zufälligen Bitmuster um eine kryptographische Prüfsumme, die für die Messwerte berechnet wird.

Das Verfahren umfasst einen vierten Verfahrensschritt 140 zum Bereitstellen und Senden des zweiten Verfahrensdatensatzes an einen Empfangsknoten/Empfänger (z. B. an einen Blockkettenknoten der insbesondere das Verfahren aus Fig. 2 realisiert/implementiert) zu einem vierten Zeitpunkt. Das Bereitstellen des zweiten Verfahrensdatensatzes kann beispielsweise wieder mittels einer Blockkette erfolgen. Der zweite Verfahrensdatensatz ist vorzugsweise unveränderlich und umfasst beispielsweise auch den Formatdatensatz oder dessen Daten. Der vierte Zeitpunkt liegt insbesondere nach dem dritten Zeitpunkt.

Die Fig. 2 zeigt ein zweites Ausführungsbeispiel der Erfindung als ein Ablaufdiagramm des erfindungsgemäßen Verfahrens zum rechnergestützten Verifizieren eines zufälligen Bitmusters. Das Verfahren wird vorzugsweise von einem Empfangsknoten, insbesondere einem Blockkettenknoten, realisiert.

Das Verfahren umfasst einen ersten Verfahrensschritt 210 zum Empfangen eines zweiten Verfahrensdatensatzes von einem Sendeknoten/Sender (beispielsweise einem Blockkettenknoten der insbesondere das Verfahren aus Fig. 1 realisiert/implementiert), wobei der zweite Verfahrensdatensatz mittels des Verfahrens nach einem der Ansprüche 1 - 10 ermittelt wurde oder durch das in Fig. 1 dargestellte Verfahren ermittelt wurde. Entsprechend umfasst der zweite Verfahrensdatensatz den ersten Verfahrensdatensatz, das zufällige Bitmuster und optional den Formatdatensatz. Der zweite Verfahrensdatensatz kann dabei, insbesondere mittels einer Blockkette an den Empfangsknoten übertragen worden sein. Entsprechend kann der zweite Verfahrensdatensatz in Transaktionen eines Blocks einer Blockkette gespeichert sein.

Das Verfahren umfasst einen zweiten Verfahrensschritt 220 zum erneuten Erfassen der Messwerte. Es werden also die gleichen Messwerte wie in Fig. 1 erfasst.

Das Verfahren umfasst einen dritten Verfahrensschritt 230 zum Berechnen einer zweiten kryptographischen Prüfsumme für Messwerte mittels der kryptographischen Funktion, die durch den ersten Verfahrensdatensatz, der beispielsweise im zweiten Verfahrensdatensatz gespeichert ist, festgelegt wird.

Das Verfahren umfasst einen vierten Verfahrensschritt 240 zum Vergleichen der zweiten kryptographischen Prüfsumme mit dem zufälligen Bitmuster (das zufällige Bitmuster kann dabei auch als eine erste Prüfsumme angesehen werden), wobei abhängig vom Prüfergebnis ein Steuersignal bereitgestellt wird. Durch das Steuersignal wird beispielsweise das Prüfergebnis bereitgestellt. Gibt das Prüfergebnis an, dass die zweite kryptographische Prüfsumme mit dem zufälligen Bitmuster übereinstimmt, so kann mittels des Steuersignals bzw. des Prüfergebnisses gesteuert werden, dass das kryptographische Verfahren anhand des zufälligen Bitmusters seine Eingabeparameter (z. B. Seed, privater Schlüssel, Startwerte, Parameter für elliptische Kurven) bestimmt.

Stimmt die zweite kryptographische Prüfsumme mit dem zufälligen Bitmuster nicht überein, so kann mittels des Steuersignals ein Übermitteln des zufälligen Bitmusters an das kryptographische Verfahren unterbunden werden.

Die in der Fig. 1 und Fig. 2 dargestellten Verfahren stellen insbesondere ein Sendeverfahren und ein Empfangsverfahren dar, das insbesondere jeweils durch einen Knoten in einer Blockkette realisiert werden kann. Es ist auch denkbar, dass das Verfahren beispielsweise durch einen Smart-Contract definiert wird bzw. die einzelnen Verfahrensschritte jeweils mittels eines Smart-Contracts realisiert werden. Dabei wird der Smart-Contract beispielsweise von einer virtuellen Maschine ausgeführt (z. B. in einer Ethereum-basierten Blockkette). Der Smart-Contract selbst ist dabei insbesondere auf einen oder mehrere Knoten der Blockkette verteilt.

Es ist beispielsweise auch denkbar, dass ein Knoten der Blockkette oder ein Smart-Contract der Blockkette (also ein Smart-Contract eines Blockes der Blockkette) beide Verfahren der Fig. 1 und der Fig. 2 realisiert. Ein solcher Knoten/Smart-Contract könnte beispielsweise das Bereitstellen und Verifizieren als Service anbieten, die frei oder gegen eine monatliche Gebühr nutzbar sind.

Mit anderen Worten wird durch die Erfindung ein Verfahren realisiert (z. B. die Verfahren aus Fig. 1 und/oder Fig. 2), bei dem die Nachvollziehbarkeit der zufälligen Wahl eines zufälligen Bitmusters b vollständig gewährleistet wird, insbesondere für die Einbeziehung dieses zufälligen Bitmusters in eine Publikation oder Standardisierung eines kryptographischen Verfahrens.

Dabei sind insbesondere die zeitlichen Aspekte relevant, die beispielsweise eine bestimmten Reihenfolge und/oder auch zeitlichen Abstände zwischen den einzelnen Schritten des Verfahrens erfordern.

Zunächst wird insbesondere das kryptographische Verfahren und/oder die für das kryptographische Verfahren notwendigen Parameter vorzugsweise vollständig in dem ersten Verfahrensdatensatz und/oder Formatdatensatz definiert, allerdings ohne das zufällige Bitmuster (das nachweisbar zufällig sein soll) festzulegen.

Zum ersten Zeitpunkt T0 wird der erste Verfahrensdatensatz und der Formatdatensatz, welche beispielsweise die Beschreibung (also die Anforderungen und die Parameter) des Verfahrens umfassen bzw. ein Hashwert dieser Daten, veröffentlicht oder einem Zeitstempeldienst übergeben oder in einer öffentlichen Blockkette abgelegt oder bei einem Standardisierungsgremium eingereicht.

Insbesondere sind diese Datensätze für einen zukünftigen Verifizierer (also jemand, der das zufällige Bitmuster verifizieren möchte) zugänglich und nachvollziehbar. Zudem ist insbesondere sichergestellt, dass diese Datensätze zum ersten Zeitpunkt T0 öffentlich vorgelegen haben.

Ebenso wird zum ersten Zeitpunkt T0 das Format/Eigenschaften (z. B. eine Listendarstellung der Messwerte und das Datenformat z. B. String, Integer usw.) der Messwerte (z. B. deren Anzahl, das Datenformat usw.) und/oder deren Reihenfolge festgelegt (z. B. mittels des Formatdatensatzes), wobei die Messwerte zum Zeitpunkt T0 noch nicht bekannt sind, die aber zu einem späteren und wohldefinierten Zeitpunkt T1 (zweiter Zeitpunkt) bekannt werden, und dann für einen längeren Zeitraum öffentlich oder für künftige Verifizierer überprüfbar publiziert werden.

Dabei wird angenommen, dass insbesondere auf die konkreten (Mess-)werte niemand mit vertretbarem Aufwand Einfluss nehmen kann.

Beispielsweise kann es sich bei den Messwerten um eine Liste von Aktienkursen zum zweiten Zeitpunkt T1 handeln ("Schlusskurs der DAX30 Aktien an der Frankfurter Börse am 15.06.2017 in alphabetischen Reihenfolge"). Eine weitere Möglichkeit ist das Festlegen der Geburtenrate in einer Auswahl bestimmter geographischer Regionen.

In einer weiteren Variante wird beispielsweise ein zukünftiger Block einer Blockkette beispielsweise als erste Datenquelle für die Messwerte festgelegt. Beispielsweise wird der Hashwert des Blocks k+30*24*6 in der (Bitcoin) Blockkette, der ca. 30 Tage nach dem derzeit aktuellen Block k erwartet wird, als Messwert(e) oder ein Teil der Transaktionen des entsprechenden Blocks als Messwerte festgelegt. Dies kann beispielsweise in dem ersten Verfahrensdatensatz festlegt sein. Der Block k kann beispielsweise zum ersten Zeitpunkt in die Blockkette eingefügt worden sein und vorzugsweise den ersten Verfahrensdatensatz und/oder den Formatdatensatz umfassen.

Ebenso wird eine Formatierungsfunktion bzw. Konvertierungsfunktion durch den ersten Verfahrensdatensatz oder den Formatdatensatz festgelegt, die die Messwerte x unmehrdeutig einen in das Format konvertiert (z. B. Strings in Integerwerte konvertiert).

Ebenso kann durch den ersten Verfahrensdatensatz oder den Formatdatensatz die Funktion H festgelegt werden, welche das zufällige Bitmuster anhand der Messwerte berechnet. H kann z. B. eine kryptographische Hashfunktion sein.

Der erste Verfahrensdatensatz umfasst ebenfalls diese Daten - z. B. Beschreibung des Verfahrens und der Parameter, Funktion H usw.

Zum zweiten Zeitpunkt T1 oder später (z. B. zu dem dritten Zeitpunkt) wird eine neue Version der Beschreibung des Verfahrens als zweiter Verfahrensdatensatz erstellt, der mit der ursprünglichen Fassung (also dem ersten Verfahrensdatensatz) mit Ausnahme der Festlegung des zufälligen Bitmusters b übereinstimmt. Diese Fassung (also der zweite Verfahrensdatensatz) ist die definierende Fassung des kryptographischen Verfahrens. Auch diese Fassung, insbesondere mittels des zufälligen Bitmusters b, kann nun nachweisbar veröffentlicht werden, z. B. über eine Blockkette, ein Notariat oder auch einfach in einer Zeitung.

Nach der Publikation der definierenden Fassung kann von jedem Interessierten ("Verifizierer") ab dem vierten Zeitpunkt T2 die Zufälligkeit des zufälligen Bitmusters b überprüft werden, indem die von einer unabhängigen Quelle (also der ersten Datenquelle) die Liste der festgelegten Werte (also die Messwerte) bezieht, diese entsprechend der Formatierungsfunktion aufbereitet (analog zu Fig. 1) und anschließend mit der Funktion H die zweite Prüfsumme für die aufbereiteten Messwerte erzeugt. Die erfolgreiche oder erfolglose Verifikation kann z. B. im Rahmen der Standardisierung oder als Kommentar zu einer Publikation dokumentiert werden. Dies kann beispielsweise automatisiert und semi-automatisch mittels des Steuersignals realisiert werden.

Die Länge der Liste von Werten (also die Anzahl der Messwerte) sowie die zeitliche Differenz T1-T0 sind vorzugsweise so zu wählen, dass ein zukünftiger Verifizierer davon überzeugt werden kann, dass das resultierende zufällige Bitmuster wirklich hinreichend zufällig ist.

Wird beispielsweise nur ein Aktienkurs in der Liste angegeben (z.B. Schlusskurs der Siemens Aktie ausgehend von heute in einem Monat), so kann man erwarten, dass sich der Kurs in einem Monat in einer Bandbreite von 20 Euro bewegt, wobei die Schlusskurse auf ganze fünf Cent-Beträge gerundet sind. Es gibt also 20*20 = 400 mögliche Kurswerte; deren Entropie ist günstigstenfalls E = log2(400) < 9 Bit. Ein künftiger Verifizierer wird dadurch nicht von der Zufälligkeit des Wertes überzeugt.

Nachfolgend ein vereinfachtes Beispiel, bei dem ein Verifizierer von der Zufälligkeit überzeugt werden kann. Anhand der DAX30-Aktienkurse kann man z. B. folgende Abschätzung treffen:
Die Euro- und Cent-Werte der Aktienkurse sollen für T1-T0 = vier Wochen so zufällig und statistisch unabhängig sein, dass man für jede Aktie mindestens vier Bit Entropie abschätzen kann.

Bei 30 Aktien erhält man also mindestens 120 Bit Entropie, was für ein kryptographisches Sicherheitsniveau von 120 Bit ausreicht. Die erste Datenquelle kann hierbei ein Internetdienst für Aktienkurse oder eine Homepage mit Aktienkursen sein.

Beispielsweise wird zum Zeitpunkt T0 = 15.04.2017 eine erste Version eines kryptographischen Standards/Verfahrens publiziert (also der erste Verfahrensdatensatz und der Formatdatensatz), der u.a. eine bestimmte Primzahl festlegt (oder festlegen soll). Es wird darin beschrieben, wie mit Hilfe eines zufälligen Seeds/Startwert b (also zufällige Bitmuster aus Fig. 1 oder Fig. 2) und eines genau definierten deterministischen Zufallszahlengenerators eine Primzahl berechnet wird. Jedoch wird das zufällige Bitmuster/Seed b noch nicht festgelegt.

Zusätzlich wird festgelegt, dass zur Berechnung von dem zufälligen Bitmuster b die Schlusskurse der DAX-30 Aktien vom 12.05.2017 verwendet werden sollen, diese in alphabetischer Reihenfolge verwendet werden sollen und nur durch Semikolons (";") getrennt sein sollen. Die Funktion H (also die kryptographischen Funktion) soll die Hashfunktion SHA-256 sein.

Zum Zeitpunkt T1 (Börsenschluss am 12.05.2017) werden folgende Aktienkurse ermittelt:
Adidas: 176,20 EUR, Allianz: 172,80 EUR, ... Vonovia: 35,95 EUR Formatiert ergibt sich:
   Y =
   "176,20;172,80;89,56;116,75;87,24;94,70;9,459:207,80;69,07;.. .;35,95"
   (der Einfachheit halber wurden nur einige Werte angegeben).

Das zufällige Bitmuster bzw. Seed b wird wie folgt berechnet b = SHA-256(Y) = 23f31b42c056d19ed73de873cc4b61c717b0caccb499b89053a1d93524774 f18

Die Fig. 3 zeigt ein drittes Ausführungsbeispiel der Erfindung als erste Vorrichtung zum rechnergestützten Bereitstellen eines zufälligen Bitmusters.

Die Vorrichtung umfasst ein erstes Bereitstellungsmodul 310, ein erstes Erfassungsmodul 320, ein erstes Berechnungsmodul 330, ein erstes Kommunikationsmodul 340 und eine optionale erste Kommunikationsschnittstelle 304 (z. B. zur Kommunikation mit Blockkettenknoten), die über einen ersten Bus 303 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 303 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Bereitstellungsmodul 310 ist zum Bereitstellen eines ersten Verfahrensdatensatzes und eines Formatdatensatzes zu einem ersten Zeitpunkt eingerichtet.

Das erste Bereitstellungsmodul 310 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die entsprechenden Datensätze bereitgestellt werden.

Das erste Erfassungsmodul 320 ist zum Erfassen von Messwerten zu einem zweiten Zeitpunkt eingerichtet, wobei der zweite Zeitpunkt nach dem ersten Zeitpunkt liegt und die Messwerte ein Format erfüllen, das durch den Formatdatensatz definiert ist.

Das erste Erfassungsmodul 320 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Messwerte erfasst werden.

Das erste Berechnungsmodul 330 ist zum Berechnen des zufälligen Bitmusters anhand der Messwerte mittels einer kryptographischen Funktion zu einem dritten Zeitpunkt eingerichtet, wobei der dritte Zeitpunkt der zweite Zeitpunkt ist oder nach dem zweiten Zeitpunkt liegt und die kryptographische Funktion durch den ersten Verfahrensdatensatz festgelegt wird. Zudem wird zum dritten Zeitpunkt ein zweiter Verfahrensdatensatz erzeugt wird und in dem zweiten Verfahrensdatensatz der erste Verfahrensdatensatz und das zufällige Bitmuster zugeordnet gespeichert wird.

Das erste Berechnungsmodul 330 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass das zufällige Bitmuster berechnet wird.

Das erste Kommunikationsmodul 340 ist zum Bereitstellen und Senden des zweiten Verfahrensdatensatzes zu einem vierten Zeitpunkt eingerichtet.

Das erste Kommunikationsmodul 340 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass der zweite Verfahrensdatensatz bereitgestellt und gesendet wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Die Fig. 4 zeigt ein viertes Ausführungsbeispiel der Erfindung als zweite Vorrichtung zum rechnergestützten Verifizieren eines zufälligen Bitmusters.

Die Vorrichtung umfasst ein zweites Kommunikationsmodul 410, ein zweites Erfassungsmodul 420, ein zweites Berechnungsmodul 430, ein zweites Vergleichsmodul 440 und eine optionale erste Kommunikationsschnittstelle 404 (z. B. zur Kommunikation mit Blockkettenknoten), die über einen ersten Bus 403 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 403 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das zweite Kommunikationsmodul 410 ist zum Empfangen eines zweiten Verfahrensdatensatzes eingerichtet, wobei der zweite Verfahrensdatensatzes mittels des Verfahrens nach einem der Ansprüche 1 - 10 ermittelt wurde.

Das zweite Kommunikationsmodul 410 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass der zweite Verfahrensdatensatz empfangen wird.

Das zweite Erfassungsmodul 420 ist zum Erfassen von Messwerten eingerichtet.

Das zweite Erfassungsmodul 420 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Messwerte erfasst werden.

Das zweite Berechnungsmodul 430 ist zum Berechnen einer zweiten kryptographischen Prüfsumme für die Messwerte mittels der kryptographischen Funktion eingerichtet, wobei die kryptographische Funktion durch den ersten Verfahrensdatensatz festgelegt wird.

Das zweite Berechnungsmodul 430 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die zweite kryptographische Prüfsumme berechnet wird.

Das zweite Vergleichsmodul 440 ist zum Vergleichen der zweiten kryptographischen Prüfsumme mit dem zufälligen Bitmuster eingerichtet, wobei abhängig vom Prüfergebnis ein Steuersignal bereitgestellt wird.

Das zweite Vergleichsmodul 440 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass das Vergleichen durchgeführt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014

## Patentansprüche

1. Verfahren zum rechnergestützten Bereitstellen eines zufälligen Bitmusters mit den Verfahrensschritten:
- Bereitstellen eines ersten Verfahrensdatensatzes und eines Formatdatensatzes zu einem ersten Zeitpunkt;
- Erfassen von Messwerten zu einem zweiten Zeitpunkt, wobei
- der zweite Zeitpunkt nach dem ersten Zeitpunkt liegt,
- die Messwerte ein Format erfüllen, das durch den Formatdatensatz festgelegt wird;
- Berechnen des zufälligen Bitmusters anhand der Messwerte mittels einer kryptographischen Funktion zu einem dritten Zeitpunkt, wobei
- der dritte Zeitpunkt der zweite Zeitpunkt ist oder nach dem zweiten Zeitpunkt liegt;
- die kryptographische Funktion durch den ersten Verfahrensdatensatz festgelegt wird,
- zum dritten Zeitpunkt ein zweiter Verfahrensdatensatz erzeugt wird,
- in einem zweiten Verfahrensdatensatz der erste Verfahrensdatensatz und das zufällige Bitmuster zugeordnet gespeichert wird;
- Bereitstellen und Senden des zweiten Verfahrensdatensatzes zu einem vierten Zeitpunkt.

2. Verfahren nach Anspruch 1, wobei im ersten Verfahrensdatensatz der Formatdatensatz gespeichert wird oder der erste Verfahrensdatensatz den Formatdatensatz umfasst.

3. Verfahren nach Anspruch 1 oder 2, wobei
- durch den ersten Verfahrensdatensatz ein erster zeitlicher Mindestabstand zwischen dem ersten Zeitpunkt und/oder dem zweiten Zeitpunkt vorgegeben wird, und/oder
- durch den ersten Verfahrensdatensatz ein zweiter zeitlicher Mindestabstand zwischen dem zweiten Zeitpunkt und/oder dem dritten Zeitpunkt vorgegeben wird, und/oder
- durch den ersten Verfahrensdatensatz ein dritter zeitlicher Mindestabstand zwischen dem dritten Zeitpunkt und/oder dem vierten Zeitpunkt vorgegeben wird.

4. Verfahren nach einem der vorhergehenden Ansprüche, wobei eine erste Datenquelle für die Messerwerte durch den ersten Verfahrensdatensatz festgelegt wird.

5. Verfahren nach einem der vorhergehenden Ansprüche, wobei
- eine zeitliche Mindestdauer einer Verfügbarkeit der Messwerte durch den ersten Verfahrensdatensatz festgelegt wird und/oder
- eine zeitliche Maximaldauer einer Verfügbarkeit der Messwerte durch den ersten Verfahrensdatensatz festgelegt wird.

6. Verfahren nach einem der vorhergehenden Ansprüche, wobei das Bereitstellen des ersten Verfahrensdatensatzes und/oder des Formatdatensatzes und/oder des zweiten Verfahrensdatensatzes mittels einer Blockkette und/oder eines Zeitstempeldienstes und/oder einer Publikation erfolgt.

7. Verfahren nach einem der vorhergehenden Ansprüche, wobei der erste Verfahrensdatensatz und/oder der Formatdatensatz und/oder der zweite Verfahrensdatensatz derart bereitgestellt werden, dass diese unveränderlich sind.

8. Verfahren nach einem der vorhergebenden Ansprüche, wobei die Messwerte reproduzierbar erfasst werden können.

9. Verfahren nach einem der vorhergehenden Ansprüche, wobei der Formatdatensatz eine Konvertierungsfunktion festlegt, mittels der die Messwerte in das Format gebracht werden.

10. Verfahren nach einem der vorhergehenden Ansprüche, wobei
- eine zweite Datenquelle oder weitere Datenquellen durch den ersten Verfahrensdatensatz festgelegt werden,
- die zweite Datenquelle oder die weiteren Datenquellen die kryptographische Funktion und/oder die Formatierungsfunktion bereitstellen.

11. Verfahren zum rechnergestützten Verifizieren eines zufälligen Bitmusters mit den Verfahrensschritten:
- Empfangen eines zweiten Verfahrensdatensatzes, wobei der zweite Verfahrensdatensatzes mittels des Verfahrens nach einem der Ansprüche 1 - 10 ermittelt wurde,
- Erfassen der Messwerte ;
- Berechnen einer zweiten kryptographischen Prüfsumme für die Messwerte mittels der kryptographischen Funktion die durch den ersten Verfahrensdatensatz festgelegt wird;
- Vergleichen der zweiten kryptographischen Prüfsumme mit dem zufälligen Bitmuster, wobei abhängig vom Prüfergebnis ein Steuersignal bereitgestellt wird.

12. Erste Vorrichtung zum rechnergestützten Bereitstellen eines zufälligen Bitmusters aufweisend:
- ein erstes Bereitstellungsmodul (310) zum Bereitstellen eines ersten Verfahrensdatensatzes und eines Formatdatensatzes zu einem ersten Zeitpunkt;
- ein erstes Erfassungsmodul (320) zum Erfassen von Messwerten zu einem zweiten Zeitpunkt, wobei
- der zweite Zeitpunkt nach dem ersten Zeitpunkt liegt,
- die Messwerte ein Format erfüllen, das durch den Formatdatensatz definiert ist;
- ein erstes Berechnungsmodul (330) zum Berechnen des zufälligen Bitmusters anhand der Messwerte mittels einer kryptographischen Funktion zu einem dritten Zeitpunkt, wobei
- der dritte Zeitpunkt der zweite Zeitpunkt ist oder nach dem zweiten Zeitpunkt liegt;
- die kryptographische Funktion durch den ersten Verfahrensdatensatz festgelegt wird,
- zum dritten Zeitpunkt ein zweiter Verfahrensdatensatz erzeugt wird,
- in dem zweiten Verfahrensdatensatz der erste Verfahrensdatensatz und das zufällige Bitmuster zugeordnet gespeichert wird;
- ein erstes Kommunikationsmodul (340) zum Bereitstellen und Senden des zweiten Verfahrensdatensatzes zu einem vierten Zeitpunkt.

13. Zweite Vorrichtung zum rechnergestützten Verifizieren eines zufälligen Bitmusters aufweisend:
- ein zweites Kommunikationsmodul (410) zum Empfangen eines zweiten Verfahrensdatensatzes, wobei der zweite Verfahrensdatensatzes mittels des Verfahrens nach einem der Ansprüche 1 - 10 ermittelt wurde,
- ein zweites Erfassungsmodul (420) zum Erfassen der Messwerte;
- ein zweites Berechnungsmodul (430) zum Berechnen einer zweiten kryptographischen Prüfsumme für die Messwerte mittels der kryptographischen Funktion, die durch den ersten Verfahrensdatensatz festgelegt wird;
- ein zweites Vergleichsmodul (440) zum Vergleichen der zweiten kryptographischen Prüfsumme mit dem zufälligen Bitmuster, wobei abhängig vom Prüfergebnis ein Steuersignal bereitgestellt wird.

14. Computerprogrammprodukt mit Programmbefehlen zur Durchführung der Verfahren nach einem der Ansprüche 1 - 10 und/oder nach Anspruch 11.

15. Computerprogrammprodukt mit Programmbefehlen für ein Erstellungsgerät, das mittels der Programmbefehle konfiguriert wird, die erste Vorrichtung nach Anspruch 12 und/oder die zweite Vorrichtung nach Anspruch 13 zu erstellen.

16. Bereitstellungsvorrichtung für das Computerprogrammprodukt nach Anspruch 14 oder 15, wobei die Bereitstellungsvorrichtung das Computerprogrammprodukt speichert und/oder bereitstellt.

## Geänderte Patentansprüche

### Geänderte Patentansprüche gemäss Regel 137(2) EPÜ.

1. Verfahren zum rechnergestützten Bereitstellen eines zufälligen Bitmusters mit den Verfahrensschritten:
- Bereitstellen eines ersten Verfahrensdatensatzes und eines Formatdatensatzes zu einem ersten Zeitpunkt;
- Erfassen von Messwerten zu einem zweiten Zeitpunkt, wobei
- der zweite Zeitpunkt nach dem ersten Zeitpunkt liegt,
- die Messwerte ein Format erfüllen, das durch den Formatdatensatz festgelegt wird;
- Berechnen des zufälligen Bitmusters anhand der Messwerte mittels einer kryptographischen Funktion zu einem dritten Zeitpunkt, wobei
- der dritte Zeitpunkt der zweite Zeitpunkt ist oder nach dem zweiten Zeitpunkt liegt;
- die kryptographische Funktion durch den ersten Verfahrensdatensatz festgelegt wird,
- zum dritten Zeitpunkt ein zweiter Verfahrensdatensatz erzeugt wird,
- in einem zweiten Verfahrensdatensatz der erste Verfahrensdatensatz und das zufällige Bitmuster zugeordnet gespeichert wird;
- Bereitstellen und Senden des zweiten Verfahrensdatensatzes zu einem vierten Zeitpunkt, wobei
- eine zweite Datenquelle oder weitere Datenquellen durch den ersten Verfahrensdatensatz festgelegt werden,
- die zweite Datenquelle oder die weiteren Datenquellen die kryptographische Funktion bereitstellen.

2. Verfahren nach Anspruch 1, wobei im ersten Verfahrensdatensatz der Formatdatensatz gespeichert wird oder der erste Verfahrensdatensatz den Formatdatensatz umfasst.

3. Verfahren nach Anspruch 1 oder 2, wobei
- durch den ersten Verfahrensdatensatz ein erster zeitlicher Mindestabstand zwischen dem ersten Zeitpunkt und/oder dem zweiten Zeitpunkt vorgegeben wird, und/oder
- durch den ersten Verfahrensdatensatz ein zweiter zeitlicher Mindestabstand zwischen dem zweiten Zeitpunkt und/oder dem dritten Zeitpunkt vorgegeben wird, und/oder
- durch den ersten Verfahrensdatensatz ein dritter zeitlicher Mindestabstand zwischen dem dritten Zeitpunkt und/oder dem vierten Zeitpunkt vorgegeben wird.

4. Verfahren nach einem der vorhergehenden Ansprüche, wobei eine erste Datenquelle für die Messerwerte durch den ersten Verfahrensdatensatz festgelegt wird.

5. Verfahren nach einem der vorhergehenden Ansprüche, wobei
- eine zeitliche Mindestdauer einer Verfügbarkeit der Messwerte durch den ersten Verfahrensdatensatz festgelegt wird und/oder
- eine zeitliche Maximaldauer einer Verfügbarkeit der Messwerte durch den ersten Verfahrensdatensatz festgelegt wird.

6. Verfahren nach einem der vorhergehenden Ansprüche, wobei das Bereitstellen des ersten Verfahrensdatensatzes und/oder des Formatdatensatzes und/oder des zweiten Verfahrensdatensatzes mittels einer Blockkette und/oder eines Zeitstempeldienstes und/oder einer Publikation erfolgt.

7. Verfahren nach einem der vorhergehenden Ansprüche, wobei der erste Verfahrensdatensatz und/oder der Formatdatensatz und/oder der zweite Verfahrensdatensatz derart bereitgestellt werden, dass diese unveränderlich sind.

8. Verfahren nach einem der vorhergebenden Ansprüche, wobei die Messwerte reproduzierbar erfasst werden können.

9. Verfahren nach einem der vorhergehenden Ansprüche, wobei der Formatdatensatz eine Konvertierungsfunktion festlegt, mittels der die Messwerte in das Format gebracht werden.

10. Verfahren nach einem der vorhergehenden Ansprüche, wobei
- - die zweite Datenquelle oder die weiteren Datenquellen die Formatierungsfunktion bereitstellen.

11. Verfahren zum rechnergestützten Verifizieren eines zufälligen Bitmusters mit den Verfahrensschritten:
- Empfangen eines zweiten Verfahrensdatensatzes, wobei der zweite Verfahrensdatensatzes mittels des Verfahrens nach einem der Ansprüche 1 - 10 ermittelt wurde,
- Erfassen der Messwerte;
- Berechnen einer zweiten kryptographischen Prüfsumme für die Messwerte mittels der kryptographischen Funktion die durch den ersten Verfahrensdatensatz festgelegt wird;
- Vergleichen der zweiten kryptographischen Prüfsumme mit dem zufälligen Bitmuster, wobei abhängig vom Prüfergebnis ein Steuersignal bereitgestellt wird.

12. Erste Vorrichtung zum rechnergestützten Bereitstellen eines zufälligen Bitmusters aufweisend:
- ein erstes Bereitstellungsmodul (310) zum Bereitstellen eines ersten Verfahrensdatensatzes und eines Formatdatensatzes zu einem ersten Zeitpunkt;
- ein erstes Erfassungsmodul (320) zum Erfassen von Messwerten zu einem zweiten Zeitpunkt, wobei
- der zweite Zeitpunkt nach dem ersten Zeitpunkt liegt,
- die Messwerte ein Format erfüllen, das durch den Formatdatensatz definiert ist;
- ein erstes Berechnungsmodul (330) zum Berechnen des zufälligen Bitmusters anhand der Messwerte mittels einer kryptographischen Funktion zu einem dritten Zeitpunkt, wobei
- der dritte Zeitpunkt der zweite Zeitpunkt ist oder nach dem zweiten Zeitpunkt liegt;
- die kryptographische Funktion durch den ersten Verfahrensdatensatz festgelegt wird,
- zum dritten Zeitpunkt ein zweiter Verfahrensdatensatz erzeugt wird,
- in dem zweiten Verfahrensdatensatz der erste Verfahrensdatensatz und das zufällige Bitmuster zugeordnet gespeichert wird,
- eine zweite Datenquelle oder weitere Datenquellen durch den ersten Verfahrensdatensatz festgelegt werden,
- die zweite Datenquelle oder die weiteren Datenquellen die kryptographische Funktion bereitstellen;
- ein erstes Kommunikationsmodul (340) zum Bereitstellen und Senden des zweiten Verfahrensdatensatzes zu einem vierten Zeitpunkt.

13. Zweite Vorrichtung zum rechnergestützten Verifizieren eines zufälligen Bitmusters aufweisend:
- ein zweites Kommunikationsmodul (410) zum Empfangen eines zweiten Verfahrensdatensatzes, wobei der zweite Verfahrensdatensatz mittels des Verfahrens nach einem der Ansprüche 1 - 10 ermittelt wurde,
- ein zweites Erfassungsmodul (420) zum Erfassen der Messwerte;
- ein zweites Berechnungsmodul (430) zum Berechnen einer zweiten kryptographischen Prüfsumme für die Messwerte mittels der kryptographischen Funktion, die durch den ersten Verfahrensdatensatz festgelegt wird;
- ein zweites Vergleichsmodul (440) zum Vergleichen der zweiten kryptographischen Prüfsumme mit dem zufälligen Bitmuster, wobei abhängig vom Prüfergebnis ein Steuersignal bereitgestellt wird.

14. Computerprogrammprodukt mit Programmbefehlen zur Durchführung der Verfahren nach einem der Ansprüche 1 - 10 und/oder nach Anspruch 11.

15. Computerprogrammprodukt mit Programmbefehlen für ein Erstellungsgerät, das mittels der Programmbefehle konfiguriert wird, die erste Vorrichtung nach Anspruch 12 und/oder die zweite Vorrichtung nach Anspruch 13 zu erstellen.

16. Bereitstellungsvorrichtung für das Computerprogrammprodukt nach Anspruch 14 oder 15, wobei die Bereitstellungsvorrichtung das Computerprogrammprodukt speichert und/oder bereitstellt.
